# EUROPÄISCHE PATENTSCHRIFT

(11) **EP 2 507 564 B1**
(45) Veröffentlichungstag und Bekanntmachung des Hinweises auf die Patenterteilung: **11.01.2017**
(21) Anmeldenummer: 10781847.8
(22) Anmeldetag: 23.11.2010
(51) Int. Cl.: F24J 2/52

(54) **TRAGANORDNUNG FÜR EINE SOLARANLAGE**
CARRIER ASSEMBLY FOR A SOLAR ENERGY SYSTEM
ENSEMBLE SUPPORT POUR UNE INSTALLATION SOLAIRE

(30) Priorität: 03.12.2009 DE 202009016353 U
(43) Veröffentlichungstag der Anmeldung: 10.10.2012
(73) Patentinhaber: C.W.F. GmbH, 74676 Niedernhall (DE)
(72) Erfinder: FRANZ, Günter, 74547 Untermünkheim-Enslingen (DE)
(74) Vertreter: Patentanwälte Magenbauer & Kollegen Partnerschaft mbB
(86) Internationale Anmeldenummer: PCT/EP2010/007088
(87) Internationale Veröffentlichungsnummer: WO 2011/066913

(56) Entgegenhaltungen:
- DE-U1-202005 008 159
- DE-U1-202006 014 047
- DE-U1-202008 005 020
- DE-U1-202009 001 983
- DE-U1-202010 000 993
- JP-A- 60 122 867
- DATABASE EPODOC [Online] EUROPEAN PATENT OFFICE, THE HAGUE, NL; 30. Januar 2009 (2009-01-30), XP002660181, Database accession no. KR-20070073857-A -& KR 2009 0010605 A (PARK YOUNG SOO) 30. Januar 2009 (2009-01-30)

## Beschreibung

Die Erfindung betrifft eine Traganordnung für eine Solaranlage, mit mindestens einer Bodenstütze, die einen am oberen Endbereich eines nach oben ragenden Stützpfostens angeordneten oder anbringbaren Querträger aufweist, der alternativ in mehreren sich in ihrer bezüglich der Horizontalen eingenommenen Neigung voneinander unterscheidenden Tragpositionen an dem Stützpfosten fixierbar ist, wobei der Querträger mittels zwei in der Längsrichtung des Querträgers zueinander beabstandeten Traggelenken an jeweils einem von zwei Querträgerhaltern fixierbar oder fixiert und über diese Querträgerhalter an dem Stützpfosten befestigbar oder befestigt ist, wobei der in Längsrichtung des Stützpfostens relativ zueinander eingenommene Höhenabstand der Traggelenke variabel einstellbar ist.

Derartige Traganordnungen werden im Zusammenhang mit der Errichtung von Solaranlagen verwendet und gestatten eine Montage der üblicherweise plattenförmigen Solarmodule in einer bezüglich der Horizontalen geneigten Arbeitsebene. Die Neigung der Arbeitsebene orientiert sich am Aufstellungsort der Solaranlage und den dort hinsichtlich der Sonneneinstrahlung anzutreffenden Gegebenheiten.

Aus der DE-U-20 2008 002 297 ist eine Traganordnung bekannt, die über mehrere Bodenstützen verfügt, die jeweils einen an einem Untergrund in nach oben ragender Weise fixierbaren Stützpfosten und einen am oberen Endbereich des Stützpfostens angeordneten, zum Tragen der Solarmodule dienenden Querträger aufweisen. Der Querträger ist so ausgebildet, dass er alternativ in mehreren Tragpositionen am Stützpfosten fixierbar ist, die sich in ihrer jeweils bezüglich der horizontalen eingenommenen Neigung voneinander unterscheiden. Auf diese Weise ist es möglich, bei der Installation einer Solaranlage vor Ort die Neigung des Querträgers individuell auszurichten. Dabei kann je nach Ausgestaltung die Möglichkeit gegeben sein, die Tragposition des Querträgers stufenweise oder stufenlos zu variieren.

Aus der DE 20 2009 001 983 U ist eine Traganordnung der eingangs genannten Art bekannt, die einen an einem Basispfosten schwenkbar gelagerten Schwenkträger aufweist. Die Neigung des Schwenkträgers ist mittels zweier Streben einstellbar, die jeweils einerseits an dem Basispfosten und andererseits an dem Schwenkträger befestigt sind. Die Befestigungspunkte an dem Schwenkträger sind variabel.

Die vorliegende Erfindung hat sich zur Aufgabe gestellt, eine Traganordnung der eingangs genannten Art so zu optimieren, dass sie bei hoher Tragfähigkeit sehr einfach installierbar ist.

Zur Lösung dieser Aufgabe ist vorgesehen, dass jeder Querträgerhalter an dem Stützpfosten in dessen Längsrichtung verstellbar angeordnet ist und dadurch die in Längsrichtung des Stützpfostens relativ zu diesem eingenommenen Höhenpositionen beider Traggelenke unabhängig voneinander variabel einstellbar sind.

Der Querträger ist mithin unter Vermittlung zweier Traggelenke bezüglich dem Stützpfosten abgestützt oder abstützbar, wobei diese beiden Traggelenke in der Längsrichtung des Querträgers beabstandet zueinander platziert sind. Die Traggelenke bewirken eine stabile Abstützung des Querträgers und schaffen somit beste Voraussetzungen für eine hohe Tragfähigkeit und eine hohe Widerstandsfähigkeit gegen Windlasten. Bedingt durch die doppelte gelenkige Abstützung besteht die Möglichkeit, die Tragposition des Querträgers einfach dadurch zu variieren, dass der in der Längsrichtung des Stützpfostens gemessene, zwischen den beiden Traggelenken vorhandene Höhenabstand verändert wird. Bei Bedarf kann auf diese Weise ein sehr großer Neigungs-Einstellbereich zur Verfügung gestellt werden. Vorzugsweise lässt sich der zwischen den beiden Traggelenken vorhandene Höhenabstand stufenlos einstellen, wenngleich prinzipiell auch eine stufenweise Justiermöglichkeit vorhanden sein könnte. Um den Höhenabstand zwischen den beiden Traggelenken verändern zu können, ist jedes Traggelenk hinsichtlich seiner bezüglich des Stützpfostens eingenommenen Höhenposition verstellbar. Dies schafft die zusätzliche Möglichkeit, die vom Querträger eingenommene Höhenposition ohne Neigungsveränderung zu variieren. Die Höhenpositionen der beiden Traggelenke können unabhängig voneinander variiert werden.

Vorteilhafte Weiterbildungen der Erfindung gehen aus den Unteransprüchen hervor.

Die Bodenstütze verfügt über eine besonders hohe Stabilität im Gebrauchszustand, wenn sich die Gelenkigkeit eines oder beider Traggelenke, bevorzugt lösbar, blockieren lässt. Um dies zu ermöglichen, kann das blockierbare Traggelenk verspannbar ausgebildet sein. Während der Montage bzw. Neigungseinstellung ist die Gelenkblockierung gelöst und wird zweckmäßigerweise nach der Einstellung der gewünschten Tragposition fixiert.

Das Verspannen des mindestens einen blockierbaren Traggelenkes erfolgt zweckmäßigerweise mittels einer Spannschraube. Die Spannschraube kann ein Bestandteil des betreffenden Traggelenkes sein, insbesondere derart, dass sie im nicht festgezogenen Zustand eine Gelenkachse des betreffenden Traggelenkes bildet.

Jedes in seiner Höhenposition variabel einstellbare Traggelenk verfügt zweckmäßigerweise über einen dem Querträger zugeordneten ersten Gelenkabschnitt und einen mit dem ersten Gelenkabschnitt gelenkmäßig zusammenarbeitenden zweiten Gelenkabschnitt, der dem Stützpfosten zugeordnet ist. Der erste Gelenkabschnitt ist zweckmäßigerweise direkt am Querträger angeordnet. Der zweite Gelenkabschnitt befindet sich an einem an dem Stützpfosten befestigten separaten Querträgerhalter. Handelt es sich um ein in seiner Höhenposition variabel einstellbares Traggelenk, ist der zweite Gelenkabschnitt in Längsrichtung des Stützpfostens verstellbar und bezüglich des Stützpfostens alternativ in mehreren Höhenpositionen fixierbar, wobei der dem Querträger zugeordnete erste Gelenkabschnitt diese Positionsveränderung mitmacht. Die Variation der Höhenposition erfolgt durch eine Veränderung der vertikalen Relativposition zwischen dem Querträgerhalter und dem Stützpfosten.

Zum Verändern der Höhenposition des zweiten Gelenkabschnittes ist selbiger zweckmäßigerweise ausschließlich linear, in Höhenrichtung, verschiebbar.

Wird die Höhenposition eines Traggelenkes verändert, wobei gleichzeitig der Querträger an den beiden Traggelenken gelagert ist, wird der Querträger um das andere, momentan nicht in seiner Höhenlage veränderte Traggelenk verschwenkt.

Zur Variierung der Höhenposition eines Querträgerhalters ist der Querträgerhalter zweckmäßigerweise mit zwei sich in seiner Längsrichtung erstreckenden Langlöchern ausgestattet, durch die jeweils eine Klemmschraube hindurchgreift, mittels der der Querträgerhalter lösbar mit dem Stützpfosten verspannbar ist. Sind beide Klemmschrauben gelöst, lässt sich der Querträgerhalter in der Längsrichtung des Stützpfostens in einem durch die Länge der Langlöcher vorgegebenen Bereich verschieben.

Es ist darüber hinaus von Vorteil, wenn der Querträgerhalter nicht nur linear verschiebbar, sondern auch quer dazu relativ zum Stützpfosten verschwenkbar ist. Auf diese Weise werden die Ausrichtmöglichkeiten für den Querträger noch weiter optimiert. Man kann insbesondere auch nicht exakt vertikalen Ausrichtungen des Stützpfostens problemlos Rechnung tragen.

Insbesondere dann, wenn die Maßnahmen zur Veränderung des zwischen den beiden Traggelenken vorhandenen Höhenabstandes ein rein lineares Verschieben vorsehen, verändert sich in Abhängigkeit von der Variation des Höhenabstandes der direkte Abstand zwischen den beiden Traggelenken. Damit dies nicht zu Verspannungen führt, sind bei wenigstens einem, und vorzugsweise bei genau einem Traggelenk die miteinander kooperierenden Gelenkabschnitte so ausgebildet, dass sie nicht nur über eine relative Schwenkbeweglichkeit verfügen, sondern außerdem relativ zueinander über einen translatorischen Freiheitsgrad rechtwinkelig zur Gelenkachse. Letzteres lässt sich besonders einfach dadurch verwirklichen, dass als erster Gelenkabschnitt mindestens ein Langloch vorgesehen ist, das vom zweiten Gelenkabschnitt durchsetzt wird, wobei der zweite Gelenkabschnitt in Abhängigkeit von seiner Höhenposition auch seine Längsposition innerhalb des mindestens einen Längsschlitzes verändert.

Der Querträger verfügt zweckmäßigerweise über eine nach oben weisende Auflageebene, die genutzt werden kann, um darauf eine Längsträgeranordnung zu fixieren, die sich zweckmäßigerweise über mehrere aneinandergereihte Bodenstützen hinweg erstreckt.

Die Traganordnung verfügt vorzugsweise über mehrere in einer Aufreihungsrichtung horizontal aufeinanderfolgend angeordnete Bodenstützen, die gemeinsam nutzbar sind, um eine Längsträgeranordnung für mindestens ein Solarmodul festzuhalten.

Der Querträger ist in besonders einfacher Form als Profilrohr mit Rechteckprofil ausgebildet, das einfach und kostengünstig herstellbar ist und gleichwohl über eine hohe Stabilität verfügt. Das Profilrohr ist zweckmäßigerweise an seinen beiden Stirnseiten nach unten und zum Stützpfosten hin abgeschrägt, so dass ein obenliegender, der Stirnseite benachbarter Wandabschnitt gut zugänglich ist, um daran Mittel zu fixieren, die zum Festhalten mindestens eines Solarmoduls dienen.

Nachfolgend wird die Erfindung anhand der beiliegenden Zeichnung näher erläutert. In dieser zeigen:
- Figur 1: in einer perspektivischen, schematischen Darstellung einen Ausschnitt einer erfindungsgemäßen Traganordnung, die mit mehreren horizontal mit Abstand aufgereihten Bodenstützen ausgestattet ist,
- Figur 2: eine Seitenansicht der Traganordnung aus Figur 1 mit Blickrichtung gemäß Pfeil II, wobei der Aufbau einer vorteilhaften erfindungsgemäßen Bodenstütze grob erkennbar ist,
- Figur 3: einen vergrößerten Ausschnitt der Bodenstütze aus Figur 2, wobei nur der obere Endabschnitt des Stützpfostens sichtbar ist und wobei in zwei Ausschnitten einige Details der Bodenstütze vergrößert herausgezeichnet sind,
- Figur 4: eine teilweise geschnittene Seitenansicht der Bodenstütze aus Figur 3 gemäß Schnittlinie IV-IV,
- Figur 5: eine Draufsicht auf die Bodenstütze der Figur 3 mit Blickrichtung gemäß Pfeil V, wobei der Querträger nur strichpunktiert angedeutet ist,
- Figur 6: einen Halterkörper bevorzugten Aufbaus eines Querträgerhalters,
- Figur 7: eine Einzeldarstellung des Querträgers in einer Seitenansicht, und
- Figur 8: eine Draufsicht auf den Querträger mit Blickrichtung gemäß Pfeil VIII aus Figur 7.

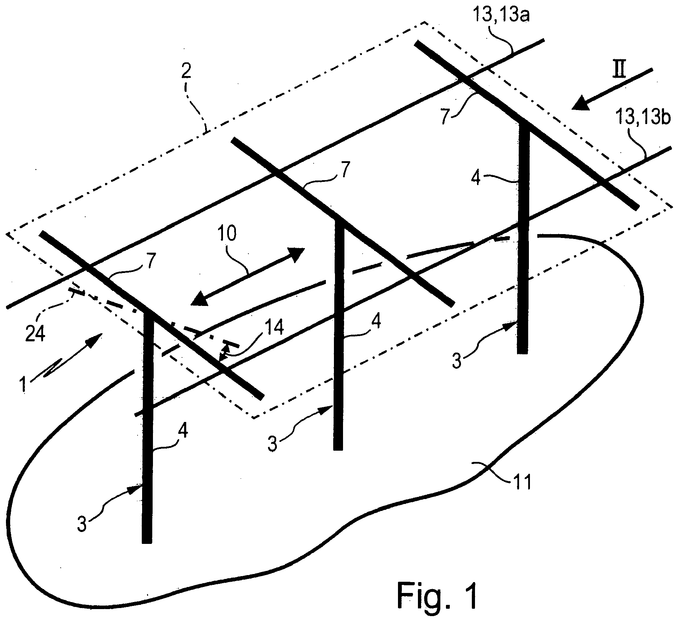

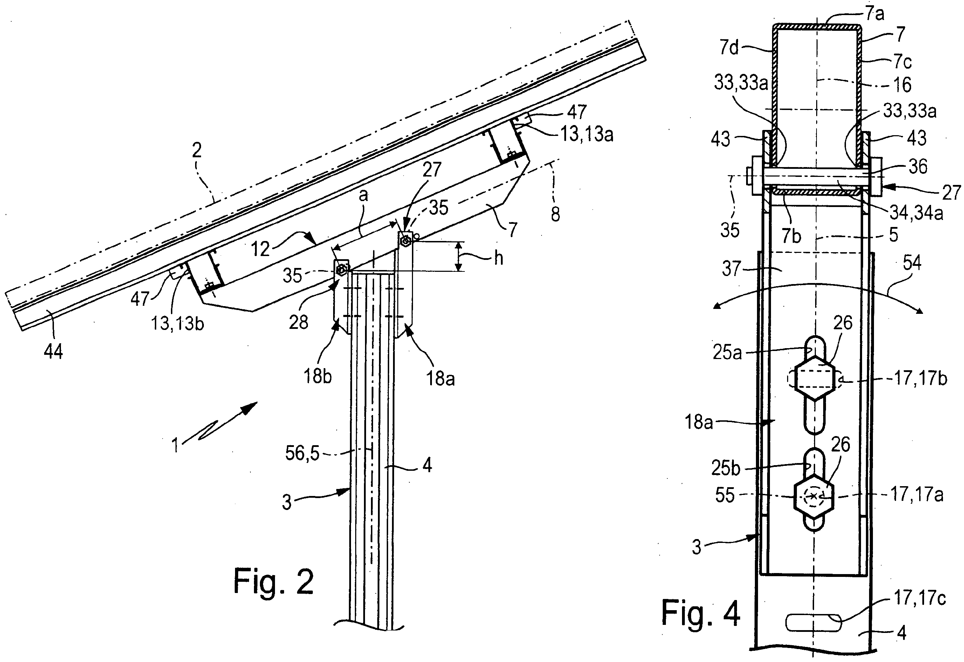

Die in der Zeichnung allgemein mit Bezugsziffer 1 bezeichnete Traganordnung dient zum Aufbau einer Solaranlage, insbesondere fotovoltaischer Art. An der Traganordnung 1 können ein oder mehrere Solarmodule 2 lösbar befestigt werden, die in Figuren 1 und 2 strichpunktiert angedeutet sind.

Die Traganordnung 1 verfügt über mindestens eine, vorzugsweise jedoch mehrere Bodenstützen 3, die an oder in einem in Figur 1 schematisch angedeuteten Boden 11 verankerbar sind. Mehrere Bodenstützen 3 werden zweckmäßigerweise in einer in Figur 1 durch einen Doppelpfeil angedeuteten horizontalen Aufreihungsrichtung 10 mit Abstand aufeinanderfolgend angeordnet. Bei dem Boden 11 handelt es sich insbesondere um den Erdboden, um ein Fundament oder um das Dach eines Gebäudes.

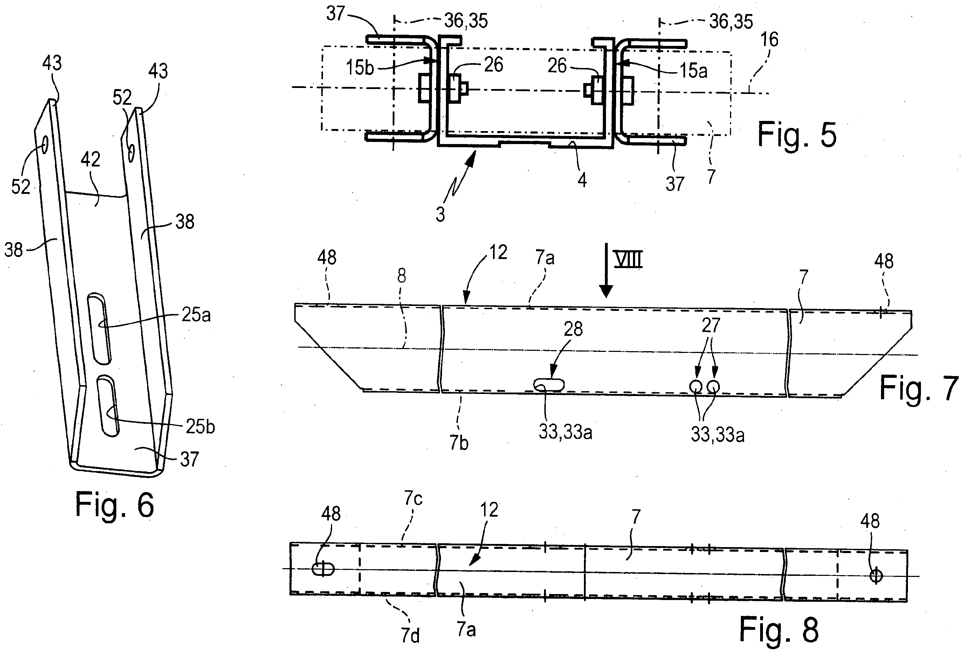

Jede Bodenstütze 3 enthält einen bei gebrauchsfertig installierter Traganordnung 1 zumindest im Wesentlichen vertikal ausgerichteten Stützpfosten 4. Bevorzugt ist dieser Stützpfosten 4, wie aus Figur 5 ersichtlich ist, offen profiliert, beispielsweise nach Art eines C-Profils, eines U-Profils oder eines sogenannten Sigma-Profils. Alternativ könnte beispielsweise auch ein geschlossenes Rohrprofil Verwendung finden. In der Zeichnung ist die in Gebrauchslage vertikal verlaufende Längsachse des Stützpfostens mit Bezugsziffer 5 bezeichnet.

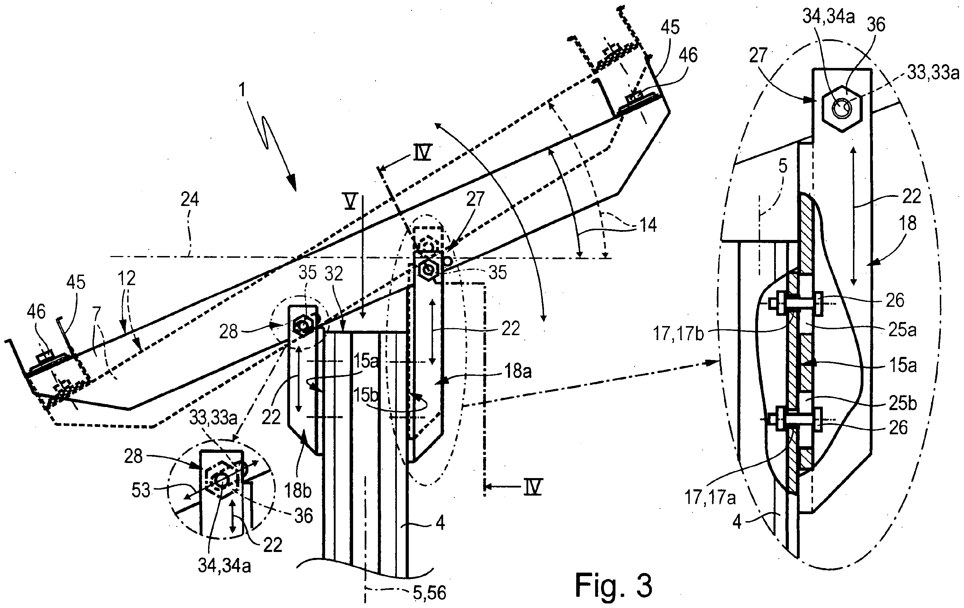

Jede Bodenstütze 3 enthält außerdem einen an dem in Gebrauchslage nach oben weisenden oberen Endbereich des Stützpfostens angebrachten Querträger 7. Der Querträger 7 ist an dem Stützpfosten 4 vorzugsweise lösbar befestigt. Der Querträger 7 hat eine längliche Gestalt mit einer Längsachse 8, die quer und insbesondere rechtwinkelig zu der in Figuren 2 und 3 senkrecht zur Zeichenebene ausgerichteten Aufreihungsrichtung 10 verläuft.

Zweckmäßigerweise definiert der Querträger 7 eine nach oben weisende Auflageebene 12 zum Auflegen des mindestens einen Solarmoduls 2. In der Regel wird das Solarmodul 2 nicht direkt auf der Auflageebene 12 platziert, sondern indirekt unter Zwischenschaltung weiterer Komponenten. Vorzugsweise ist dabei an der Auflageebene 12 eine sich aus einem oder mehreren Längsträgern 13a, 13b zusammensetzende Längsträgeranordnung 13 befestigt, die sich in der Aufreihungsrichtung 10 über mehrere Querträger 7 hinweg erstreckt. Von den beim Ausführungsbeispiel zwei Längsträgern 13a, 13b ist je einer an einem der beiden stirnseitigen Endbereiche des Querträgers 7 platziert. Auf der Längsträgeranordnung 13 sind darüber hinaus mehrere, in der Aufreihungsrichtung 10 beabstandete längliche Modulträgerelemente 44 fixiert, die parallel zur Längsachse 8 der Querträger 7 ausgerichtet sind und auf denen letztlich das mindestens eine Solarmodul 2 angeordnet ist.

Die Modulträgerelemente 44 sind beispielsweise durch Klemmklötze 47 oder sonstige Befestigungsmittel an der Längsträgeranordnung 10 fixiert.

Vorzugsweise ist jeder Längsträger 13a, 13b unter Zwischenschaltung eines beispielsweise U-förmigen Längsträgerhalters 45 an der Auflageebene 12 fixiert. Die Längsträger 13a, 13b sind in die nach oben hin offenen Längsträgerhalter 45 eingesetzt und gemeinsam mit diesen unter Verwendung von Befestigungsschrauben 46 an den Querträger 7 angeschraubt. Der Querträger 7 verfügt zu diesem Zweck in seinem die Auflageebene 12 definierenden oberen Wandabschnitt in der Nähe der beiden Stirnseiten über je ein Befestigungsloch 48, wobei zum Ausgleich von Montagetoleranzen nur eines der Befestigungslöcher 48 kreisförmig, das andere jedoch als in Richtung der Längsachse 8 orientiertes Langloch ausgebildet ist.

Der Querträger 7 ist vorzugsweise rohrförmig ausgebildet und besteht beim Ausführungsbeispiel aus einem ein Rechteckprofil aufweisenden Profilrohr. Dieses ist an den beiden Stirnseiten zweckmäßigerweise so abgeschrägt, dass der die Auflageebene 12 definierende obere Wandabschnitt 7a länger ist als der nach unten weisende untere Wandabschnitt 7b. Dies hat den vorteilhaften Effekt, dass den beiden Befestigungslöchern 48 kein unterer Wandabschnitt 7b des Querträgers gegenüberliegt und somit eine optimale Zugänglichkeit für die Montage der zugeordneten Befestigungsschraube 46 gewährleistet ist.

Prinzipiell bedarf es zur Definition der Auflageebene 12 keiner durchgehenden Fläche am Querträger 7. Es genügen einzelne Flächenabschnitte, die zum Tragen der Längsträgeranordnung 13 nutzbar sind.

Die mehreren Querträger 7 sind untereinander bezüglich einer strichpunktiert angedeuteten Horizontalebene 24 gleich ausgerichtet. Alle Auflageebenen 12 zusammen definieren eine Montageebene, auf der die Längsträgeranordnung 13 montiert oder montierbar ist.

Ein Vorteil der mindestens einen Bodenstütze 3 besteht darin, dass der Querträger 7 in mehreren sich in ihrer bezüglich der Horizontalebene 24 eingenommenen Neigung voneinander unterscheidenden Positionen am Stützpfosten 4 fixierbar ist, wobei diese Mehrzahl alternativ einstellbarer Positionen als Tragpositionen bezeichnet seien. Die mehreren Tragpositionen unterscheiden sich dementsprechend voneinander in dem zwischen der Horizontalebene 24 und der jeweiligen Auflageebene 12 eingenommenen Neigungswinkel 14. Somit kann der Querträger 7 und mithin auch das mindestens eine an ihm fixierte Solarmodul optimal bezüglich des Einfallswinkels des Sonnenlichtes ausgerichtet werden.

In Figur 3 ist exemplarisch eine erste Tragposition des Querträgers 7 in durchgezogenen Linien und eine diesbezüglich stärker geneigte zweite Tragposition in gestrichelten Linien angedeutet. Es kann dabei ein und derselbe Querträger in unterschiedlichen Neigungen positioniert werden, eines Austausches eines Querträgers bedarf es hierzu nicht.

Die unterschiedlichen Neigungen des Querträgers 7 lassen sich insbesondere durch Verschwenken des Querträgers 7 bezüglich des Stützpfostens 4 in einer zu der Aufreihungsrichtung 10 rechtwinkeligen, vertikalen Schwenkebene 16 erzielen. Verantwortlich für diese Einstellmöglichkeit ist eine besonders vorteilhafte Art der Aufhängung des Querträgers 7 am Stützpfosten 4.

Der Stützpfosten 4 verfügt an seinem oberen Endbereich an zwei einander entgegengesetzten äußeren Längsseiten über je eine Montagefläche, die zur besseren Unterscheidung als erste und zweite Montagefläche 15a, 15b bezeichnet sind. Die Montageflächen 15a, 15b sind parallel zueinander ausgerichtet und erstrecken sich rechtwinkelig zu der Schwenkebene 16.

Die Wandung des Stützpfostens 4 ist an beiden Montageflächen 15a, 15b von mehreren in der Längsrichtung 5 zueinander beabstandeten Montagelöchern 17 durchsetzt. Beim Ausführungsbeispiel sind jeweils drei solcher Montagelöcher 17 vorhanden, von denen ein mittleres Montageloch 17 als bevorzugt kreisrunde Bohrung 17a und je ein die Bohrung 17a oben und unten mit Abstand flankierendes Montageloch als oberer bzw. unterer Querschlitz 17b, 17c ausgebildet ist. Die Querschlitze 17b, 17c verlaufen richtwinkelig zur Längsachse 5.

An die erste Montagefläche 15a ist ein erster Querträgerhalter 18a angesetzt, an die zweite Montagefläche 15b ein zweiter Querträgerhalter 18b. Beide Querträgerhalter 18a, 18b erstrecken sich parallel zu der Längsachse 5. Derjenige Wandabschnitt jedes Querträgerhalters 18a, 18b, der an einer Montagefläche 15a, 15b anliegt, ist von zwei in der Längsrichtung des Querträgerhalters 18a, 18b mit Abstand aufeinanderfolgenden Langlöchern durchsetzt, die im Folgenden als oberes und unteres Langloch 25a, 25b bezeichnet sind. Jeder Querträgerhalter 18a, 18b ist derart an eine Montagefläche 15a, 15b ansetzbar, dass jedes der beiden Langlöcher 25a, 25b mit einem der Montagelöcher 17 fluchtet, wobei durch die jeweils fluchtenden Paare von Langlöchern 25 und Montagelöchern 17 je eine Klemmschraube 26 hindurchgesteckt ist, die sich derart festziehen lässt, dass der Querträgerhalter 18a, 18b unverrückbar mit dem Stützpfosten 4 verspannt ist.

Im nicht festgezogenen Zustand der Klemmschrauben 26 besteht allerdings die Möglichkeit, den zugeordneten Querträgerhalter 18a, 18b im Rahmen einer durch einen Doppelpfeil angedeuteten Einstellbewegung 22 in Längsrichtung des Stützpfostens 4 relativ zu diesem zu verschieben und dadurch in unterschiedliche Höhepositionen zu verbringen. In jeder derart eingestellten Höhenposition kann der Querträgerhalter 18a, 18b durch neuerliches Festziehen der Klemmschrauben 26 ortsfest bezüglich des Stützpfostens 4 fixiert werden.

Der höhenmäßige Verstellbereich wird insbesondere durch die Länge der Langlöcher 25a, 25b bestimmt.

Der Querträger 7 ist über ein erstes Traggelenk 27 am ersten Querträgerhalter 18a und über ein zweites Traggelenk 28 am zweiten Querträgerhalter 18b fixiert. Beide Traggelenke 27, 28 befinden sich zweckmäßigerweise am nach oben weisenden Endbereich des zugeordneten Querträgerhalters 18a, 18b.

Die beiden Traggelenke 27, 28 sind an dem Querträger 7 in dessen Längsrichtung 8 beabstandet zueinander angeordnet. Der derart gemessene Gelenkabstand ist in Figur 2 bei "a" angedeutet.

Wird ein Querträgerhalter 18a, 18b relativ zum Stützpfosten 4 vertikal verlagert, ändert sich entsprechend die Höhenposition des zugeordneten Traggelenks 27 bzw. 28, da selbiges seine Relativposition bezüglich des Stützpfostens 4 in dessen Längsrichtung 5 verändert.

Die vorgenannte Verstellbarkeit eröffnet die Möglichkeit, den in Längsrichtung des Stützpfostens relativ zueinander eingenommenen Höhenabstand "h" der beiden Traggelenke 27, 28 variabel einzustellen. Da die Traggelenke 27, 28 am Querträger 7 angeordnet sind, führt die Variation des besagten Höhenabstandes "h" zu einer Veränderung der bezüglich der Horizontalen 24 eingenommenen Neigung des Querträgers 7. Folglich kann die Neigung des Querträgers 7 durch vertikale Positionierung eines oder beider Traggelenke 27, 28 durch entsprechendes Verstellen des jeweils zugeordneten Querträgerhalters 18a, 18b realisiert werden.

Prinzipiell wäre es möglich, nur einen der Querträgerhalter 18a oder 18b höhenmäßig verstellbar auszubilden. Auch dadurch ließe sich die Neigung des Querträgers 7 verändern. Die vertikale Einstellbarkeit beider Traggelenke 27, 28 bzw. der diesen zugeordneten Querträgerhalter 18a, 18b eröffnet jedoch die Möglichkeit, nicht nur die Neigung des Querträgers 7 sondern auch dessen insgesamt bezüglich dem Stützpfosten 4 eingenommene Höhenlage variabel einzustellen.

Außerdem lässt sich durch die Verstellbarkeit beider Querträgerhalter 18a, 18b bei entsprechend großem Verstellweg ein sehr großer Schwenkbereich für den Querträger 7 realisieren, insbesondere derart, dass er ausgehend von einer horizontalen Ausrichtung in beide Richtungen verschwenkt werden kann.

Die beiden Traggelenke 27, 28 sind zweckmäßigerweise so platziert, dass sie oberhalb einer Horizontalebene liegen, die die nach oben weisende obere Stirnfläche 32 des Stützpfostens 4 beinhaltet.

Dasjenige Traggelenk 27, das normalerweise eine höhere Position als das andere Traggelenk 28 einnimmt, ist zweckmäßigerweise an einem ersten Querträgerhalter 18a angeordnet, der eine größere Länge als der andere, zweite Querträgerhalter 18b aufweist.

Jedes Traggelenk 27, 28 verfügt über einen ersten Gelenkabschnitt 33 und einen damit zusammenarbeitenden zweiten Gelenkabschnitt 34. Der erste Gelenkabschnitt 33 ist am Querträger 7 angeordnet und besteht beim Ausführungsbeispiel aus zwei horizontal miteinander fluchtenden, die beiden Seitenwände 7c, 7d des Querträgers 7 durchsetzenden Durchbrechungen 33a. Der zweite Gelenkabschnitt 34 ist dem Stützpfosten 4 zugeordnet und ist beim Ausführungsbeispiel von einem zylindrischen Bolzen 34a gebildet, der sich durch die beiden miteinander fluchtenden Durchbrechungen 33a hindurch erstreckt. Die Längsachse des Bolzens 34a definiert eine Gelenkachse oder Schwenkachse 35 des jeweiligen Traggelenkes 27, 28.

Indem die beiden Bolzen 34a parallel zueinander verlaufen, ergibt sich auch eine Parallelität zwischen den beiden Gelenkachsen 35. Die Gelenkachsen 35 erstrecken sich rechtwinkelig zu der Schwenkebene 16.

Es besteht somit eine grundsätzliche Schwenkbeweglichkeit zwischen den beiden Gelenkabschnitten 33, 34 und somit auch zwischen dem Querträger 7 und jedem der Querträgerhalter 18a, 18b. Solange jedoch die beiden Querträgerhalter 18a, 18b am Stützpfosten 4 unbeweglich fixiert sind, ist der Querträger 7 auf Grund der beabstandeten Anordnung der Traggelenke 27, 28 an einem Verschwenken gehindert und behält die momentan eingestellte Neigung bei.

Damit allerdings der Querträger 7 stabil und spielfrei unbeweglich mit den Querträgerhaltern 18a, 18b verbindbar ist, sind beim Ausführungsbeispiel beide Traggelenke 27, 28 hinsichtlich ihrer Gelenkigkeit blockierbar ausgebildet. Hierzu wird als zur Schwenklagerung dienender Bolzen 34a der Schaft einer Spannschraube 36 herangezogen, die derart festgezogen werden kann, dass die beiden Gelenkabschnitte 33, 34 in ihrer relativen Schwenkbeweglichkeit blockiert sind.

Beim Ausführungsbeispiel verfügt jeder Querträgerhalter 18a, 18b über eine einen zweiten Gelenkabschnitt 34 definierende Spannschraube 36. Der Querträgerhalter 18a, 18b enthält einen insbesondere auch aus Figur 6 ersichtlichen Halterkörper 37, der zumindest partiell U-förmig profiliert ist und der über einen zwei Schenkelabschnitte 38 verbindenden Verbindungsabschnitt 42 verfügt, in dem die beiden oben schon erwähnten Langlöcher 25a, 25b ausgebildet sind. Die beiden Schenkelabschnitte 38 sind am oberen Endabschnitt unter Bildung zweier Klemmlaschen 43 über den Verbindungsabschnitt 42 hinaus verlängert, wobei jede Klemmlasche 43 von einer von zwei miteinander fluchtenden Bohrungen 52 durchsetzt ist.

Der Halterkörper 37 ist mit dem Rücken des Verbindungsabschnittes 42 an die zugeordnete Montagefläche 15a, 15b angesetzt, so dass die U-Öffnung vom Stützpfosten 4 wegweist. Die beiden Klemmlaschen 43 bilden zusammen mit dem oberen Rand des Verbindungsabschnittes 42 einen gabelförmigen Endabschnitt des Halterkörpers 37, in den der Querträger 7 von oben her so eingesetzt ist, dass das Bohrungspaar 52 mit einem Durchbrechungspaar 33a fluchtet. Durch die derart fluchtenden Durchbrechungen 33a und Bohrungen 52 ist die Spannschraube 36 hindurchgesteckt, die sich einerseits mit ihrem Schraubenkopf und andererseits mit ihrer Schraubenmutter an den Außenflächen je einer der beiden Klemmlaschen 43 abstützt.

Um ein Traggelenk 27, 28 starr und unbeweglich zu verspannen, genügt es, die zugeordnete Spannschraube 36 festzuziehen. Die Spannschraube presst dann die beiden Klemmlaschen 43 gegen die Außenfläche des Querträgers 7 und sorgt für eine stabile Verbindung. In diesem verspannten Zustand kann durch Lösen der Klemmschrauben 26 die Neigung des Querträgers 7 nicht mehr verstellt werden, sondern nur noch seine Höhenposition bezüglich des Stützpfostens 4. Ist eine Neigungseinstellung gewünscht, werden die beiden Spannschrauben 36 zumindest so weit gelöst, dass die Schwenkbeweglichkeit zwischen dem Querträger 7 und jedem Querträgerhalter 18a, 18b wieder gegeben ist.

Beim Ausführungsbeispiel hat die Einstellbewegung 22 eine ausschließlich lineare Verlagerung des zugeordneten zweiten Gelenkabschnittes 34 in Achsrichtung der Längsachse 5 des Stützpfostens 4 zur Folge. Der Querträgerhalter 18a, 18b ist quasi nach Art eines Schlittens am Stützpfosten 4 in Höhenrichtung verschiebbar gelagert. Diese Anordnung hat zur Folge, dass sich der Gelenkabstand "a" bei einer Variation des Höhenabstandes "h" ebenfalls geringfügig ändert. Um diese Relativbewegung zu kompensieren, ist das zweite Traggelenk 28 vorzugsweise so ausgebildet, dass seine Gelenkachse über einen translatorischen Freiheitsgrad rechtwinkelig zu ihrer Achsrichtung aufweist.

Hierzu ist das zweite Traggelenk 28 so ausgebildet, dass sein zweiter Gelenkabschnitt 34 relativ zu dem ersten Gelenkabschnitt 33 in der Längsrichtung 8 des Querträgers 7 beweglich ist.

Diese vorgenannte Beweglichkeit lässt sich besonders einfach dadurch realisieren, dass die den ersten Gelenkabschnitt 33 bildenden und miteinander fluchtenden Durchbrechungen 33a als Langlöcher ausgebildet sind. In diesen Langlöchern kann der dem zweiten Gelenkabschnitt 34 definierende Bolzen 34a eine in Figur 3 durch einen Doppelpfeil illustrierte Ausgleichsbewegung 53 in der Längsrichtung der Langlöcher ausführen, wenn sich der Gelenkabstand "a" verändert.

Die zum ersten Traggelenk 27 gehörenden Durchbrechungen 33a benötigen eine solche Gestaltung nicht, bei ihnen genügt es, die reine Schwenkbeweglichkeit zu ermöglichen, weshalb sie beim Ausführungsbeispiel als einfache kreisförmige Bohrungen realisiert sind.

Man erkennt allerdings in Figur 7, dass in dem Querträger 7 mehrere im oben genannten Sinne ausgebildete erste Gelenkabschnitte 33 vorhanden sein können, die alternativ nutzbar sind, um ein erstes Traggelenk 27 zu realisieren. Diese mehreren ersten Gelenkabschnitte 33 sind in unterschiedlichem Abstand zum ersten Gelenkabschnitt 33 des zweiten Traggelenkes 28 angeordnet. Dadurch besteht die einfache Möglichkeit, ein und dieselbe Art von Querträger 7 wahlweise in Kombination mit verschiedenen Typen von Stützpfosten 4 zu nutzen, die sich in ihrer Breite, d.h. im Abstand ihrer Mantelflächen 15a, 15b voneinander unterscheiden. Um eine Bodenstütze 3 zu realisieren, wird zur Bildung eines ersten Traggelenkes 27 nur einer der mehreren zur Verfügung stehenden ersten Gelenkabschnitte 33 genutzt.

In Figur 4 ist eine vorteilhafte Ausstattung der Bodenstütze 3 illustriert, die es möglich macht, den Querträger 7 auch noch in einer zu der Schwenkebene 16 rechtwinkeligen weiteren Schwenkebene 56 bezüglich dem Stützpfosten 4 zu verschwenken bzw. mit unterschiedlichen Winkelausrichtungen an dem Stützpfosten 4 zu fixieren. Die weitere Schwenkebene 56 verläuft in Figur 4 in der Zeichenebene, die weitere Verschwenkbarkeit ist bei 54 durch einen Doppelpfeil angedeutet.

Ermöglicht wird diese zusätzliche winkelmäßige Ausrichtung vorzugsweise dadurch, dass jeder Querträgerhalter 18a, 18b in einer Weise am Stützpfosten 4 angeordnet ist, dass er um mindestens eine zur Längsachse 5 des Stützpfostens 4 rechtwinkelige Schwenkachse 55 gemäß Doppelpfeil 54 verschwenkbar ist.

Die Verschwenkbarkeit liegt dann vor, wenn die beiden Klemmschrauben 26 gelöst sind. Zum unverschwenkbaren Festsetzen eines Querträgerhalters 18a, 18b bezüglich des Stützpfostens 4 müssen die Klemmschrauben 26 lediglich wieder festgezogen werden.

Der Querträgerhalter 18a, 18b wird so an die zugeordnete Montagefläche 15a, 15b angesetzt, dass entweder das obere Langloch 25a oder das untere Langloch 25b mit der mittigen Bohrung 17a des Stützpfostens 4 fluchtet, wobei dann gleichzeitig entweder das obere Langloch 25a den oberen Querschlitz 17b überkreuzt oder das untere Langloch 25b den unteren Querschlitz 17c überkreuzt. In beiden Fällen ist eine Klemmschraube 26 durch das zugeordnete Langloch hindurch in die mittige Bohrung eingesetzt und definiert die Schwenkachse 55. Gezeigt ist in Figur 4 die erstgenannte Relativposition. Die zweite Klemmschraube 26 durchsetzt hierbei das obere Langloch 25a und den diesem zugeordneten oberen Querschlitz 17b. Bei gelösten Klemmschrauben 26 besteht nun die Möglichkeit, den Querträgerhalter 18a, 18b gemäß Doppelpfeil 54 zur einen oder anderen Seite zu verlagern, wobei sich die obere Klemmschraube 26 in dem oberen Querschlitz 17b entlang bewegt und auf diese Weise eine Schrägstellung des Querträgerhalters 18a, 18b bezüglich des Stützpfostens 4 ermöglicht, so dass deren beider Längsachsen divergieren.

In jeder derart eingestellten Schrägstellung kann die Relativposition durch Festziehen der Klemmschrauben 26 lösbar fixiert werden.

Eine vergleichbare Funktionsweise ergibt sich, wenn der Querträgerhalter 18a, 18b tiefer angeordnet ist und das untere Langloch 25b mit dem unteren Querschlitz 17c fluchtet.

Prinzipiell kann auf die zweifache Anordnung von Querschlitzen 17b, 17c auch verzichtet werden. Um die Schwenkbeweglichkeit gemäß Doppelpfeil 54 zu gewährleisten, genügt prinzipiell einer der beiden Querschlitze.

## Patentansprüche

1. Traganordnung für eine Solaranlage, mit mindestens einer Bodenstütze (3), die einen am oberen Endbereich eines nach oben ragenden Stützpfostens (4) angeordneten oder anbringbaren Querträger (7) aufweist, der alternativ in mehreren sich in ihrer bezüglich der Horizontalen (24) eingenommenen Neigung voneinander unterscheidenden Tragpositionen an dem Stützpfosten (4) fixierbar ist, wobei der Querträger (7) mittels zwei in der Längsrichtung (8) des Querträgers (7) zueinander beabstandeten Traggelenken (27, 28) an jeweils einem von zwei Querträgerhaltern (18a, 18b) fixierbar oder fixiert und über diese Querträgerhalter (18a, 18b) an dem Stützpfosten (4) befestigbar oder befestigt ist, wobei der in Längsrichtung (5) des Stützpfostens (4) relativ zueinander eingenommene Höhenabstand (h) der Traggelenke (27, 28) variabel einstellbar ist, **dadurch gekennzeichnet, dass** jeder Querträgerhalter (18a, 18b) an dem Stützpfosten (4) in dessen Längsrichtung (5) verstellbar angeordnet ist und dadurch die in Längsrichtung (5) des Stützpfostens (4) relativ zu diesem eingenommenen Höhenpositionen beider Traggelenke (27, 28) unabhängig voneinander variabel einstellbar sind.

2. Traganordnung nach Anspruch 1, **dadurch gekennzeichnet, dass** mindestens eines der Traggelenke (27, 28) und zweckmäßigerweise jedes Traggelenk (27, 28) hinsichtlich seiner Gelenkigkeit blockierbar ausgebildet ist, wobei zweckmäßigerweise das hinsichtlich seiner Gelenkigkeit blockierbare mindestens eine Traggelenk (27, 28) zum Zwecke seines Blockierens verspannbar ausgebildet ist, zu welchem Zweck es vorzugsweise eine Spannschraube (36) enthält, die im nicht festgezogenen Zustand zweckmäßigerweise eine Gelenkachse (35) definiert.

3. Traganordnung nach Anspruch 1 oder 2, **dadurch gekennzeichnet, dass** jedes in seiner Höhenposition variabel einstellbare Traggelenk (27, 28) einen dem Querträger (7) zugeordneten ersten Gelenkabschnitt (33) und einen damit zusammenarbeitenden, dem Stützpfosten (4) zugeordneten zweiten Gelenkabschnitt (34) aufweist, wobei der zweite Gelenkabschnitt (34) jeweils Bestandteil eines der an dem Stützpfosten (4) in dessen Längsrichtung (5) verstellbar angeordneten Querträgerhalter (18a, 18b) ist und dadurch in der Längsrichtung (5) des Stützpfostens (4) verstellbar und bezüglich des Stützpfostens (4) alternativ in mehreren Höhenpositionen fixierbar ist.

4. Traganordnung nach Anspruch 3, **dadurch gekennzeichnet, dass** der zweite Gelenkabschnitt (34) zur Veränderung seiner Höhenposition bezüglich dem Stützpfosten (4) in dessen Längsrichtung (5) linear verschiebbar ist.

5. Traganordnung nach Anspruch 3 oder 4, **dadurch gekennzeichnet, dass** der Querträgerhalter (18a, 18b) einen verstellbar an dem Stützpfosten (4) angeordneten Halterkörper (37) aufweist, an dem der zweite Gelenkabschnitt (34) angeordnet ist.

6. Traganordnung nach Anspruch 5, **dadurch gekennzeichnet, dass** der Halterkörper (37) mindestens ein und vorzugsweise zwei axial aufeinanderfolgend angeordnete, sich in Längsrichtung (5) des Stützpfostens (4) erstreckende Langlöcher (25a, 25b) aufweist, wobei jedes Langloch (25a, 25b) von einer auch in den Stützpfosten (4) eingreifenden Klemmschraube (26) durchsetzt ist, mittels der der Halterkörper (37) in unterschiedlichen Höhenpositionen mit dem Stützpfosten (4) verspannbar ist, wobei zweckmäßigerweise der Halterkörper (37) zumindest partiell einen U-förmigen Querschnitt aufweist und mit einem zwischen den beiden Schenkelabschnitten (38) des U-Querschnittes angeordneten Verbindungsabschnitt (42) am Stützpfosten (4) anliegt, wobei das mindestens eine Langloch (25a, 25b) in dem Verbindungsabschnitt (42) ausgebildet ist.

7. Traganordnung nach einem der Ansprüche 1 bis 6, **dadurch gekennzeichnet, dass** der Querträger (7) durch Veränderung des zwischen den beiden Traggelenken (27, 28) eingenommenen Höhenabstandes in einer ersten Schwenkebene (16) verschwenkbar ist, wobei außerdem jeder Querträgerhalter (18a, 18b) relativ zum Stützpfosten in einer zu der ersten Schwenkebene (16) rechtwinkeligen zweiten Schwenkebene (56) verschwenkbar und hierbei in unterschiedlichen Schwenkpositionen mit dem Stützpfosten (4) bezüglich diesem unverschwenkbar verspannbar ist.

8. Traganordnung nach Anspruch 7, **dadurch gekennzeichnet, dass** jeder Querträgerhalter (18a, 18b) mittels zwei ihn durchsetzender Klemmschrauben (26) an dem Stützpfosten (4) fixierbar oder fixiert ist, wobei jede Klemmschraube (26) ein Langloch (25a, 25b) des Querträgerhalters (18a, 18b) durchsetzt und wobei die eine Klemmschraube (26) eine Bohrung (17, 17a) und die andere Klemmschraube (26) einen sich quer zur Längsachse (5) des Stützpfostens (4) erstreckenden Querschlitz (17, 17b) des Stützpfostens (4) durchsetzt, wobei die die Bohrung (17, 17a) durchsetzende Klemmschraube (26) eine Schwenkachse (55) definiert, um die der Querträgerhalter (18a, 18b) im nicht festgezogenen Zustand der Klemmschrauben (26) in der zweiten Schwenkebene (56) verschwenkbar ist.

9. Traganordnung nach einem der Ansprüche 1 bis 8, **dadurch gekennzeichnet, dass** jeder Querträgerhalter (18a, 18b) einen gabelförmigen Endabschnitt aufweist, in den der Querträger (7) eingesetzt ist, wobei als zweiter Gelenkabschnitt (34) ein sich zwischen den Gabelschenkeln erstreckender Bolzen (34a) vorhanden ist, der den Querträger (7) durchsetzt und der zweckmäßigerweise Bestandteil einer Spannschraube (36) ist, mittels der der Querträger (7) in der jeweils eingestellten Tragposition zwischen den als Klemmlaschen (43) ausgebildeten Gabelschenkeln des gabelförmigen Endabschnittes verspannbar ist.

10. Traganordnung nach einem der Ansprüche 1 bis 9, **dadurch gekennzeichnet, dass** jedes Traggelenk (27, 28) einen dem Querträger (7) zugeordneten ersten Gelenkabschnitt (33) und einen mit dem ersten Gelenkabschnitt (33) zusammenwirkenden, einem der Querträgerhalter (18a, 18b) zugeordneten zweiten Gelenkabschnitt (34) aufweist, wobei die zwei Gelenkabschnitte (33, 34) beider Traggelenke (27, 28) jeweils eine Gelenkachse (35) definieren, wobei die Gelenkachsen (35) beider Traggelenke (27, 28) parallel zueinander verlaufen.

11. Traganordnung nach Anspruch 10, **dadurch gekennzeichnet, dass** die beiden Gelenkabschnitte (33, 34) jedes Traggelenkes (27, 28) über eine relative Schwenkbeweglichkeit bezüglich der zugeordneten Gelenkachse (35) verfügen, wobei außerdem mindestens eine und zweckmäßigerweise genau eine der Gelenkachsen (35) über einen translatorischen Freiheitsgrad rechtwinkelig zu ihrer Achsrichtung verfügt, wobei zweckmäßigerweise zum Erhalt des translatorischen Freiheitsgrades der erste Gelenkabschnitt (33) von mindestens einem Langloch gebildet ist, in das der zweite Gelenkabschnitt (34) derart eingreift, dass er bezüglich dem Langloch eine in dessen Längsrichtung orientierte Ausgleichsbewegung (53) ausführen kann.

12. Traganordnung nach Anspruch 10 oder 11, **dadurch gekennzeichnet, dass** bei mindestens einem Traggelenk (27, 28) der eine Gelenkabschnitt (33) von einer Durchbrechung (33a) und der andere Gelenkabschnitt (34) von einem die mindestens eine Durchbrechung (33a) durchsetzenden Bolzen (34a) gebildet ist, wobei der Bolzen (34a) zweckmäßigerweise Bestandteil einer Spannschraube (36) ist, mittels der sich die Relativposition zwischen dem Querträger (7) und dem Stützpfosten (4) fixieren lässt.

13. Traganordnung nach einem der Ansprüche 10 bis 12, **dadurch gekennzeichnet, dass** die beiden Querträgerhalter (18a, 18b) unabhängig voneinander an dem Stützpfosten (4) fixierbar sind, wobei sie zweckmäßigerweise an einander entgegengesetzten längsseitigen Montageflächen (15a, 15b) des Stützpfostens (4) ansetzbar oder angesetzt und mittels jeweils mindestens einer Klemmschraube (26) mit dem Stützpfosten (4) verspannbar sind.

14. Traganordnung nach einem der Ansprüche 1 bis 13, **dadurch gekennzeichnet, dass** der Querträger (7) eine nach oben weisende Auflageebene (12) für insbesondere eine sich über den Querträger (7) hinweg erstreckende Längsträgeranordnung (13) definiert und/oder dass die Traganordnung (1) mehrere in einer Aufreihungsrichtung (10) horizontal aufeinanderfolgend angeordnete Bodenstützen (3) aufweist, deren Querträger (7) jeweils eine nach oben weisende, bezüglich der Horizontalen (24) geneigte oder neigbare und zu der Aufreihungsrichtung (10) parallele Auflageebene (12) für eine sich über mehrere Querträger (7) hinweg erstreckende Längsträgeranordnung (13) definiert.

15. Traganordnung nach Anspruch 14, **dadurch gekennzeichnet, dass** sie pro Querträger (7) zwei zur Montage am betreffenden Querträger (7) vorgesehene Längsträgerhalter (45) aufweist, mit deren Hilfe je ein Längsträger (13a, 13b) der Längsträgeranordnung (13) an dem Querträger (7) festlegbar ist.

## Claims

1. Support arrangement for a solar installation, comprising at least one ground stay (3) provided with a crossmember (7), which is located or can be mounted in an upper end region of an upward-projecting support post (4) and which can alternatively be fixed on the support post (4) in several supporting positions differing in their inclination relative to the horizontal (24), wherein the crossmember (7) can be or is secured to each one of two crossmember holders (18a, 18b) by means of two supporting joints (27, 28) arranged at a distance from one another on the longitudinal direction (8) of the crossmember (7) and mountable or mounted on the support post (4) via these crossmember holders (18a, 18b), wherein the vertical distance (h) adopted by the supporting joints (27, 28) relative to one another in the longitudinal direction (5) of the support post (4) is variably adjustable, **characterised in that** each crossmember holder (18a, 18b) is adjustable on the support post (4) in the longitudinal direction (5) thereof, with the result the that vertical positions of the two supporting joints (27, 28) adopted relative to the support post (4) in the longitudinal direction (5) thereof are variably adjustable independently of one another.

2. Support arrangement according to claim 1, **characterised in that** at least one of the supporting joints (27, 28) and expediently each supporting joint (27, 28) is blockable in terms of its flexibility, wherein the at least one supporting joint (27, 28) blockable in terms of its flexibility is expediently designed for clamping for the purpose of blocking, for which purpose is preferably comprises a locking screw (36), which expediently defines an articulation axis (35) in the non-tightened state.

3. Support arrangement according to claim 1 or 2, **characterised in that** each supporting joint (27, 28) variably adjustable in its vertical position comprises a first joint section (33) assigned to the crossmember (7) and a second joint section (34) cooperating therewith and assigned to the support post (4), wherein the second joint section (34) is a part of one of the crossmember holders (18a, 18b) mounted on the support post and capable of adjustment in the longitudinal direction (5) thereof and is therefore adjustable in the longitudinal direction (5) of the support post (4) and alternatively locatable in several vertical positions relative to the support post (4).

4. Support arrangement according to claim 3, **characterised in that** the second joint section (34) is capable of linear displacement relative to the support post (4) in the longitudinal direction (5) thereof to change its vertical position.

5. Support arrangement according to claim 3 or 4, **characterised in that** the crossmember holder (18a, 18b) comprises a holder body (37), which is adjustably located on the support post (4) and on which the second joint section (34) is located.

6. Support arrangement according to claim 5, **characterised in that** the holder body (37) has at least one and preferably two axially consecutive slots (25a, 25b), which extend in the longitudinal direction (5) of the support post (4), wherein a clamping bolt (26), which engages with the support post (4) as well and by means of which the holder body (37) can be clamped to the support post (4) in different vertical positions, passes through each slot (25a, 25b), wherein the holder body (37) expediently has an at least partially U-shaped cross-section and rests against the support post (4) with a connecting section (42) provided between the two leg sections (38) of the U-shaped cross-section, the at least one slot (25a, 25b) being formed in the connecting section (42).

7. Support arrangement according to any of claims 1 to 6, **characterised in that** the crossmember (7) is pivotable in a first pivoting plane (16) by changing the vertical distance adopted between the two supporting joints (27, 28), wherein moreover each crossmember holder (18a, 18b) is pivotable in a second pivoting plane (56) perpendicular to the first pivoting plane (16) and non-pivotably clampable to the support post (4) relative thereto in different pivoting positions.

8. Support arrangement according to claim 7, **characterised in that** each crossmember holder (18a, 18b) can be or is secured to the support post (4) by means of two clamping bolts (26) passing through it, wherein each clamping bolt (26) passes through a slot (25a, 25b) of the crossmember holder (18a, 18b) and wherein the one clamping bolt (26) passes through a bore (17, 17a) and the other clamping bolt (26) passes through a transverse slot (17, 17b) extending transversely to the longitudinal axis (5) of the support post (4), wherein the clamping bolt (26) passing through the bore (17, 17a) defines a pivot axis (55), about which the crossmember holder (18a, 18b) is pivotable in the non-tightened state of the clamping bolts (26) in the second pivot plane (56).

9. Support arrangement according to any of claims 1 to 8, **characterised in that** each crossmember holder (18a, 18b) has a forked end section in which the crossmember (7) is placed, wherein a bolt (34a), which extends between the legs of the fork and expediently is a part of a locking screw (36) by means of which the crossmember (7) can be locked in the respectively set supporting position between the legs of the forked end section designed as location clips (43), is provided as a second joint section (34).

10. Support arrangement according to any of claims 1 to 9, **characterised in that** each supporting joint (27, 28) has a first joint section (33) assigned to the crossmember (7) and a second joint section (34) cooperating with the first joint section (33) and assigned to one of the crossmember holders (18a, 18b), wherein each of the two joint sections (33, 34) of the two supporting joints (27, 28) defines an articulation axis (35), the articulation axes (35) of the two supporting joints (27, 28) extending parallel to one another.

11. Support arrangement according to claim 10, **characterised in that** the two joint sections (33, 34) of each supporting joint (27, 28) are pivotable relative to the associated articulation axis (35), wherein moreover at least one and expediently precisely one of the articulation axes (35) has a translational degree of freedom perpendicular to its axial direction, wherein, in order to obtain the translational degree of freedom, the first joint section (33) is expediently represented by at least one slot with which the second joint section (34) engages in such a way that it can perform a compensation movement (53) with respect to the slot oriented in the longitudinal direction thereof.

12. Support arrangement according to claim 10 or 11, **characterised in that** in at least one supporting joint (27, 28) the first joint section (33) is represented by an aperture (33a) and the other joint section (34) is represented by a bolt (34a) passing through the at least one aperture (33a), wherein the bolt (34a) expediently is a part of a locking screw (36), by means of which the relative position between the crossmember (7) and the support post (4) can be fixed.

13. Support arrangement according to any of claims 10 to 12, **characterised in that** the two crossmember holders (18a, 18b) can be secured to the support post (4) independently of one another, wherein they can be or are expediently fitted to opposite longitudinal-side mounting surfaces (15a, 15b) of the support post (4) and clamped to the support post (4) by means of a clamping bolt (26).

14. Support arrangement according to any of claims 1 to 13, **characterised in that** the crossmember (7) defines an upward-oriented supporting plane (12) for a side member assembly (13), which in particular extends beyond the crossmember (7), and/or **in that** the support arrangement (1) comprises a plurality of ground stays (3), which are arranged in a horizontally consecutive manner in a line-up direction (10), and each crossmember (7) of which defines an upward-oriented supporting plane (12) for a side member assembly (13) extending across several crossmembers (7), which supporting plane (12) is or can be inclined relative to the horizontal (24) and is parallel to the line-up direction (10).

15. Support arrangement according to claim 14, **characterised in that** it comprises for each crossmember (7) two side member holders (45) provided for mounting on the respective crossmember (7), by means of which side member holders (45) one side member (13a, 13b) each of the side member assembly (13) can be located on the crossmember (7).

## Revendications

1. Ensemble porteur pour une installation solaire, comprenant au moins un support au sol (3), lequel présente une traverse (7) disposée ou pouvant être installée au niveau de la zone d'extrémité d'un pilier de support (4) dépassant vers le haut, ladite traverse peut être fixée au niveau du pilier de support (4) en variante dans plusieurs positions porteuses se distinguant les unes des autres eu égard à leur inclinaison adoptée par rapport à l'horizontale (24), dans lequel la traverse (7) peut être fixée ou est fixée au moyen de deux articulations porteuses (27, 28) espacées l'une de l'autre dans la direction longitudinale (8) de la traverse (7) au niveau respectivement d'un parmi deux systèmes de maintien de traverse (18a, 18b) et peut être fixée ou est fixée au niveau du pilier de support (4) par l'intermédiaire desdits systèmes de maintien de traverse (18a, 18b), dans lequel la distance en hauteur (h) l'une par rapport à l'autre des articulations porteuses (27, 28) adoptée dans la direction longitudinale (5) du pilier de support (4) peut être réglée de manière variable, **caractérisé en ce que** chaque système de maintien de traverse (18a, 18b) est disposé au niveau du pilier de support (4) de manière à pouvoir être ajusté dans la direction longitudinale (5) du pilier de support (4) et de ce fait les positions en hauteur des deux articulations porteuses (27, 28) adoptées par rapport du pilier de support (4) dans la direction longitudinale (5) du pilier de support (4) peuvent être réglées de manière variable indépendamment les unes des autres.

2. Ensemble porteur selon la revendication 1, **caractérisé en ce qu'**au moins une des articulations porteuses (27, 28) et, de manière appropriée, chaque articulation porteuse (27, 28) sont réalisées de manière à pouvoir être bloquées en matière de souplesse, dans lequel de manière appropriée l'au moins une articulation porteuse (27, 28) pouvant être bloquée en matière de souplesse est réalisée de manière à pouvoir être serrée aux fins d'un blocage, à l'effet duquel elle contient de préférence une vis de tension (36), qui définit de manière appropriée un axe d'articulation (35) dans l'état non resserré.

3. Ensemble porteur selon la revendication 1 ou 2, **caractérisé en ce que** chaque articulation porteuse (27, 28) pouvant être réglée de manière variable dans sa position en hauteur présente une première section d'articulation (33) pouvant être réglée de manière variable dans sa position en hauteur, et une deuxième section d'articulation (34) coopérant avec la première section d'articulation, associée au pilier de support (4), dans lequel la deuxième section d'articulation (34) fait respectivement partie intégrante d'un système de maintien de traverse (18a, 18b) disposé de manière à pouvoir être ajusté au niveau du pilier de support (4) dans sa direction longitudinale (5) et peut être ajustée de ce fait dans la direction longitudinale (5) du pilier de support (4) et être fixée par rapport au pilier de support (4) en variante dans plusieurs positions en hauteur.

4. Ensemble porteur selon la revendication 3, **caractérisé en ce que** la deuxième section d'articulation (34) peut être déplacée par un coulissement linéaire par rapport au pilier de support (4) dans sa direction longitudinale (5) afin de modifier sa position en hauteur.

5. Ensemble porteur selon la revendication 3 ou 4, **caractérisé en ce que** le système de maintien de traverse (18a, 18b) présente un corps de maintien (37) disposé de manière à pouvoir être ajusté au niveau du pilier de support (4), au niveau duquel la deuxième section d'articulation (34) est disposée.

6. Ensemble porteur selon la revendication 5, **caractérisé en ce que** le corps de maintien (37) présente au moins un, de préférence deux trous oblongs (25a, 25b) disposés de manière à se suivre axialement, s'étendant dans la direction longitudinale (5) du pilier de support (4), dans lequel chaque trou oblong (25a, 25b) est traversé par une vis de serrage (26) venant en prise également avec le pilier de support (4), au moyen de laquelle le corps de maintien (37) peut être assemblé par serrage au pilier de support (4) en différentes positions en hauteur, dans lequel de manière appropriée le corps de maintien (37) présente au moins en partie une section transversale en forme de U et repose au niveau du pilier de support (4) par une section de liaison (42) disposée entre les deux sections de branche (38) de la section transversale en U, dans lequel l'au moins un trou oblong (25a, 25b) est réalisé dans la section de liaison (42).

7. Ensemble de support selon l'une quelconque des revendications 1 à 6, **caractérisé en ce que** la traverse (7) peut pivoter dans un premier plan de pivotement (16) du fait de la modification de la distance en hauteur adoptée entre les deux articulations porteuses (27, 28), dans lequel en outre chaque système de maintien de traverse (18A, 18b) peut pivoter par rapport au pilier de support dans un deuxième plan de pivotement (56) situé à angle droit par rapport au premier plan de pivotement (16) et peut être assemblé par serrage au pilier de support (4) de manière à ne pas pouvoir pivoter par rapport à ce dernier dans le cas présent dans différentes positions de pivotement.

8. Ensemble porteur selon la revendication 7, **caractérisé en ce que** chaque système de maintien de traverse (18a, 18b) peut être fixé ou est fixé au moyen de deux vis de serrage (26) le traversant au niveau du pilier de support (4), dans lequel chaque vis de serrage (26) traverse un trou oblong (25a, 25b) du système de maintien de traverse (18a, 18b) et dans lequel l'une des vis de serrage (26) est un alésage (17, 17a) et l'autre vis de serrage (26) traverse une entaille transversale (17, 17b) du pilier de support (4) s'étendant de manière transversale par rapport à l'axe longitudinal (5) du pilier de support (4), dans lequel la vis de serrage (26) traversant l'alésage (17, 17a) définit un axe de pivotement (55), autour duquel le système de maintien de traverse (18a, 18b) peut pivoter dans le deuxième plan de pivotement (56) quand les vis de serrage (26) ne sont pas resserrées.

9. Ensemble porteur selon l'une quelconque des revendications 1 à 8, **caractérisé en ce que** chaque système de maintien de traverse (18a, 18b) présente une section d'extrémité en forme de fourche, dans laquelle la traverse (7) est insérée, dans lequel un boulon (34a) s'étendant entre les branches de fourche est présent en tant que deuxième section d'articulation (34), lequel traverse la traverse (7) et qui fait de manière appropriée partie intégrante d'une vis de tension (36), au moyen de laquelle la traverse (7) peut être assemblée par serrage dans la position porteuse respectivement réglée, entre les branches de fourche, réalisées sous la forme de brides de serrage (43), de la section d'extrémité en forme de fourche.

10. Ensemble porteur selon l'une quelconque des revendications 1 à 9, **caractérisé en ce que** chaque articulation porteuse (27, 28) présente une première section d'articulation (33) associée à la traverse (7) et une deuxième section d'articulation (34) coopérant avec la première section d'articulation (33), associée à l'un des systèmes de maintien de traverse (18a, 18b), dans lequel les deux sections d'articulation (33, 34) des deux articulations porteuses (27, 28) définissent respectivement un axe d'articulation (35), dans lequel les axes d'articulation (35) des deux articulations porteuses (27, 28) s'étendent de manière parallèle l'une par rapport à l'autre.

11. Ensemble porteur selon la revendication 10, **caractérisé en ce que** les deux sections d'articulation (33, 34) de chaque articulation porteuse (27, 28) disposent d'une mobilité par pivotement relative par rapport à l'axe d'articulation (35) associé, dans lequel en outre au moins un et de manière appropriée précisément un des axes d'articulation (35) dispose d'un degré de liberté par translation à angle droit par rapport à sa direction axiale, dans lequel de manière appropriée, afin d'obtenir le degré de liberté par translation, la première section d'articulation (33) est formée par au moins un trou oblong, avec lequel la deuxième section d'articulation (34) vient en prise de telle manière qu'elle peut exécuter, par rapport au trou oblong, un déplacement de compensation (53) orienté dans la direction longitudinale de ce dernier.

12. Ensemble porteur selon la revendication 10 ou 11, **caractérisé en ce que** dans le cas au moins d'une articulation porteuse (27, 28), une section d'articulation (33) est formée par un ajour (33a) et l'autre section d'articulation (34) est formée par un boulon (34a) traversant l'au moins un ajour (33a), dans lequel le boulon (34a) fait de manière appropriée partie intégrante d'une vis de tension (36), au moyen de laquelle la position relative entre la traverse (7) et le pilier d'appui (4) peut être fixée.

13. Ensemble porteur selon l'une quelconque des revendications 10 à 12, **caractérisé en ce que** les deux systèmes de maintien de traverse (18a, 18b) peuvent être fixés au niveau du pilier de support (4) indépendamment l'un de l'autre, dans lequel ils peuvent être placés ou sont placés de manière appropriée au niveau de surfaces de montage (15a, 15b), situées du côté longitudinal opposé, du pilier de support (4) et peuvent être assemblés par serrage au pilier de support (4) au moyen respectivement d'au moins une vis de serrage (26).

14. Ensemble porteur selon l'une quelconque des revendications 1 à 13, **caractérisé en ce que** la traverse (7) définit un plan de réception (12) pointant vers le haut pour en particulier un ensemble de longerons (13) s'étendant au-delà de la traverse (7), et/ou **en ce que** l'ensemble porteur (1) présente plusieurs supports au sol (3) disposés en se suivant de manière horizontale dans une direction d'alignement (1), dont la traverse (7) définit respectivement un plan de réception (12) pointant vers le haut, incliné ou pouvant être incliné par rapport à l'horizontale (24), parallèle par rapport à la direction d'alignement (10) pour un ensemble de longerons (13) s'étendant au-delà de plusieurs traverses (7).

15. Ensemble porteur selon la revendication 14, **caractérisé en ce qu'**il présente, par traverse (7), deux systèmes de maintien de longerons (45) prévus aux fins du montage au niveau de la traverse (7) concernée, à l'aide desquels respectivement un longeron (13a, 13b) de l'ensemble de longerons (13) peut être immobilisé au niveau de la traverse (7).
